# EUROPEAN PATENT APPLICATION

(11) **EP 4 691 251 A1**
(43) Date of publication of application: **11.02.2026**
(21) Application number: 24780420.6
(22) Date of filing: 27.03.2024
(51) Int. Cl.: A23G 1/44, A23G 1/46, A23G 1/48, A23J 3/16, A23L 11/00

(54) **WATER-CONTAINING CHOCOLATE**

(30) Priority: 31.03.2023 JP 2023058191
(71) Applicant: Fuji Oil Company, Limited, Izumisano-shi Osaka 598-8540 (JP)
(72) Inventor: HE, Mogeng, Izumisano-shi, Osaka 598-8540 (JP); MORIKAWA, Kazutoshi, Izumisano-shi, Osaka 598-8540 (JP)
(74) Representative: Becker, Eberhard
(86) International application number: PCT/JP2024/012192
(87) International publication number: WO 2024/204314

(57) **Abstract**

To address the problem of providing a water-containing chocolate having suitability for squeezing and good shape retention after squeezing the chocolate. A water-containing chocolate comprising a protein material having specific properties.

## Description

### Technical Field

### Related Application

This application claims the benefit of priority from Japanese Patent Application No. 2023-058191 filed on March 31, 2023. The priority application is incorporated herein by reference in its entirety.

The present invention relates to a water-containing chocolate.

### Background Art

A water-containing chocolate produced by adding an aqueous component to a chocolate is widely used for western confectioneries, frozen confectioneries, and desserts. Among water-containing chocolates, water-containing chocolates specified as containing 10 mass% or more of fresh cream, 60 mass% or more of chocolate-standard chocolate, and 10 mass% or more of a total weight of water can be labeled as nama chocolate (Japanese creamy chocolate) and are more highly appealing as products.

However, there are many limitations on distribution and storage temperature due to the restriction in the standard and the presence of oil and/or fat and water content in an emulsified state, and there is a limit to diversification of product forms.

As a method for satisfying both squeezing suitability of chocolate and shape retainability after squeezing of chocolate, there is a method for aerating chocolate.

However, in the aerated chocolate, since air bubbles are interposed in a chocolate dough, the chocolate has a light texture and a light flavor, and thus the aerated chocolate has a drawback of weakened chocolate-like rich texture and flavor.

### Citation List

### Patent Document

Patent Document 1: JP 2020-18222 A

### Summary of Invention

### Technical Problem

Although a water-containing chocolate capable of being displayed as nama chocolate may be squeezed and used, since the chocolate is hard to cut and has poor workability, it is difficult to maintain the shape, and the shape easily collapses, their use applications are limited.

If both the squeezing suitability of chocolate and the shape retainability after squeezing of chocolate can be satisfied, a range of use of the water-containing chocolate can be expanded.

Patent Document 1 discloses a technique for improving the post-squeezing shape retainability water-containing chocolate. However, unlike the present invention, the water-containing chocolate of Patent Document 1 does not contain a non-fat solid derived from cacao, that is, does not contain cocoa mass or cocoa powder, and an applicable range is extremely limited.

To maintain the shape of nama chocolate, a technique of supplementing with a gelling agent such as agar and gelatin can be exemplified. In the case of using the gelling agent, it is necessary to blend the gelling agent in a large amount to maintain the shape, the gelling agent has hard physical properties and is difficult to squeeze. In addition, the texture comes close to a texture like yokan (azuki bean jelly), and thus an original texture of nama chocolate is lost.

An object of the present invention is to provide water-containing chocolate having a good chocolate squeezing suitability and good shape retainability after squeezing of chocolate.

### Solution to Problem

As a result of intensive studies to solve the above issue, the present inventors have found that a water-containing chocolate using a protein material having specific properties can solve the above issue, and have completed the present invention.

That is, the present invention includes the following contents.
(1) A water-containing chocolate containing a protein material having the following properties (A) and (B):
   (A) after an aqueous solution having a crude protein mass of 20 mass% is heated at 80°C for 30 minutes, a viscosity measured at 25°C is 10000 mPa·s or less; and
   (B) a TCA solubility of 0.22 M is from 30 to 95%.
(2) The water-containing chocolate according to (1), wherein the protein material further has the following properties (C):
   (C) NSI is 80 or more.
(3) The water-containing chocolate according to (1) or (2), wherein an oil content is from 20 to 50 mass%, and a water content is from 10 to 40 mass%.
(4) The water-containing chocolate according to (3), wherein a ratio of the water content to the oil content is from 0.4 to 0.8.
(5) A method for producing a water-containing chocolate, the method including blending a protein material having the following properties (A) and (B) to produce an oil-in-water emulsion having an oil content of from 20 to 50 mass% and a water content of from 10 to 40 mass%:
   (A) after an aqueous solution having a crude protein mass of 20 mass% is heated at 80°C for 30 minutes, a viscosity measured at 25°C is 10000 mPa·s or less; and
   (B) a TCA solubility of 0.22 M is from 30 to 95%.
(6) The method for producing a water-containing chocolate according to (5), wherein the protein material further has the following properties (C):
   (C) NSI is 80 or more.
(7) The method for producing a water-containing chocolate according to (5) or (6), wherein a ratio of the water content to the oil content is adjusted to from 0.4 to 0.8.
(8) The method for producing a water-containing chocolate according to (5) or (6), the method including inverting a phase from a water-in-oil emulsified state to an oil-in-water emulsified state.
(9) The method for producing a water-containing chocolate according to (7), the method further including inverting a phase from a water-in-oil emulsified state to an oil-in-water emulsified state.
(10) A method for improving squeezing suitability and post-squeezing shape retainability of a water-containing chocolate, the method including blending a protein material having the following properties (A) and (B):
   (A) after an aqueous solution having a crude protein mass of 20 mass% is heated at 80°C for 30 minutes, a viscosity measured at 25°C is 10000 mPa·s or less; and
   (B) a TCA solubility of 0.22 M is from 30 to 95%.
(11) A method for improving squeezing suitability and post-squeezing shape retainability of a water-containing chocolate according to (10), wherein the protein material further has the following properties (C):
   (C) NSI is 80 or more.
(12) A method for improving squeezing suitability and post-squeezing shape retainability of a water-containing chocolate according to (10) or (11), wherein an oil content is from 20 to 50 mass%, and a water content is from 10 to 40 mass%.
(13) A method for improving squeezing suitability and post-squeezing shape retainability of a water-containing chocolate according to (12), wherein a ratio of the water content to the oil content is from 0.4 to 0.8.

### Advantageous Effects of Invention

According to the present invention, it is possible to provide a water-containing chocolate having a good chocolate squeezing suitability and good shape retainability after squeezing of chocolate.

The water-containing chocolate of the present invention can also be used in applications where the water-containing chocolate has been used so far, such as sandwiching the water-containing chocolate between confectionery doughs. For example, the water-containing chocolate of the present invention can also be used as a nappe (applying to a surface of a cake and the like with a spatula) for a cake and the like, a topping for western confectionery such as an artificial flower made using a confectionery tool, a filling for confectionery such as sandwiching the water-containing chocolate between cake doughs, or the like.

### Description of Embodiments

The present invention will be described in detail below.

### ∘ Chocolate and water-containing chocolate

In the present specification, the term "chocolate" is not limited to "pure chocolate", "chocolate", and "semi-chocolate" defined by the Japan National Chocolate Industry Fair Trade Council, but also includes "chocolate-like food" using cocoa mass, cocoa powder, cocoa butter, cocoa butter alternative, hard butter or the like.

In addition, the water-containing chocolate of the present invention includes "nama chocolate" and all of those produced by kneading the chocolate, which are defined in "The Fair Competition Code Concerning Labeling for Chocolates", with an aqueous component, and "chocolate" used as a raw material of the "water-containing chocolate" is denoted as "base chocolate" or "base chocolate for use in a water-containing form".

Examples of the water-containing chocolate include oil-in-water emulsions, water-in-oil emulsions, and those produced by double emulsification or phase inversion emulsification in which the oil-in-water emulsion and the water-in-oil emulsion are combined, and are not particularly limited in the present invention; however, a desirable aspect of the water-containing chocolate of the present invention is the oil-in-water emulsion.

As the water-containing chocolate of the present invention, it is preferable to use a chocolate conforming to the chocolate standard or the milk chocolate standard defined by the Japan National Chocolate Industry Fair Trade Council as a base chocolate.

In addition, it is preferable that the water-containing chocolate of the present invention satisfies "nama chocolate" standard defined in "The Fair Competition Code Concerning Labeling for Chocolates".

### ∘ Protein material

The water-containing chocolate of the present invention contains a protein material having a low viscosity after heating. Specifically, the viscosity after heating can be measured as follows. An aqueous solution of the present protein material is prepared so as to have a crude protein content of 20 mass%, and is heated at 80°C for 30 minutes, and then the viscosity of the aqueous solution is measured at 25°C. (A) The viscosity after heating is 10000 mPa·s or less, preferably 5000 mPa·s or less, 1000 mPa·s or less, and 500 mPa·s or less, and more preferably 200 mPa·s or less, and 100 mPa·s or less.

When the viscosity of the present protein material after heating is more than 10000 mPa·s, emulsifiability may deteriorate and workability may deteriorate when a water-containing chocolate is produced using the protein material.

The present protein material requires a molecular weight of a certain size. The molecular weight is defined by a TCA solubility. In the present invention, the TCA solubility is defined by the ratio of the content of crude protein dissolved in 0.22 M TCA to the total crude protein content. (B) The TCA solubility is from 30 to 95%, preferably from 35 to 90%, more preferably from 40 to 85% and from 50 to 80%. When the TCA solubility is too low, the viscosity after heating tends to increase, which is not suitable. On the other hand, when the TCA solubility is too high, the amount of the protein contributing to emulsifiability decreases, and it is necessary to add a large amount of the present protein material, so that a degree of freedom of formulation decreases, which is not preferable.

The present protein material preferably has (C) an NSI (nitrogen solubility index) used as an index of protein solubility of 80 or more. More preferably, a protein material having an NSI of 85 or higher, 90 or higher, 95 or higher, or 97 or higher can be used. A high NSI of the present protein material indicates high dispersibility in water and can contribute to dispersion stability of the water-containing chocolate of the protein material. When the NSI of the plant protein material is too low, precipitation tends to occur, which is not preferred. The crude protein content in the present protein material is also preferably 30 mass% or more, more preferably 50 mass% or more, and most preferably 70 mass% or more. A protein material having a higher crude protein content can exhibit its function in a smaller amount.

Such a protein material can be produced by a denaturation and molecular weight adjustment treatment described later, and examples thereof include "MIRA-MAP 2.0" (available from Fuji Oil Co., Ltd.). Soybean protein materials such as FUJIPRO R, FUJIPRO 748, FUJIPRO CL, and HINUTE AM (all available from Fuji Oil Co., Ltd.) do not fall under this requirement.

Although the origin of the protein material to be prepared is not particularly limited, plant-derived, animal-derived, or microorganism-derived proteins can be used. Examples of the plant protein include proteins derived from beans, such as soybean, pea, mung bean, lupin bean, chickpea, kidney bean, lentil bean, and cowpea; seeds, such as sesame, canola seed, coconut seed, and almond seed; grains, such as corn, buckwheat, wheat, and rice; vegetables; fruits; algae; and microalgae. For example, a protein material derived from soybean is prepared by further concentrating and processing protein from a soybean material, such as defatted soybean or whole soybean, and in general, examples conceptually include soybean protein isolates, soybean protein concentrates, soybean milk powder, or various processed products of those.

Examples of the animal protein include egg proteins containing ovalbumin; milk proteins such as casein, whey, lactalbumin, lactalbumin; proteins derived from blood such as plasma, serum albumin, and decolorized hemoglobin; proteins derived from meat; and proteins derived from fish and shellfish. In addition, proteins derived from microorganisms such as yeasts, molds and bacteria can be used. Even in a protein having poor solubility in water, a protein material that can be used in the present invention can be prepared by the treatment described below.

### ∘ Denaturation and molecular weight adjustment treatment

The protein material used in the present invention can be produced by applying combination of "degradation/denaturation treatment" for degrading and/or denaturing a protein and "molecular weight distribution adjustment treatment" for adjusting molecular weight distribution of the protein. Examples of the "degradation/denaturation treatment" include enzyme treatment, pH adjustment treatment (e.g., acid treatment or alkali treatment), denaturant treatment, heating treatment, cooling treatment, high-pressure treatment, organic solvent treatment, mineral addition treatment, supercritical treatment, ultrasonic treatment, electrolysis treatment, and combination of these. Examples of the "molecular weight distribution adjustment treatment" include filtration, gel filtration, chromatography, centrifugation, electrophoresis, dialysis, and combinations thereof. The order and number of operations of the "degradation/denaturation treatment" and the "molecular weight distribution adjustment treatment" are not particularly limited; the "degradation/denaturation treatment" may be performed before the "molecular weight distribution adjustment treatment", the "molecular weight distribution adjustment treatment" may be performed before the "degradation/denaturation treatment", or both treatments may be performed at the same time. In addition, for example, it is also possible to perform the "degradation/denaturation treatment" between two or more times of the "molecular weight distribution adjustment treatment", to perform the "molecular weight distribution adjustment treatment" between two or more times of the "degradation/denaturation treatment", or to perform each treatment a plurality of times in any order. In a case where a desired molecular weight distribution is provided by the "degradation/denaturation treatment, the "molecular weight distribution adjustment treatment" need not be performed.

When these treatments are combined and carried out a plurality of times, all the treatments may be carried out continuously from the raw material stage or may be carried with intervals therebetween. For example, a commercially available product that has undergone a certain treatment may be used as a raw material and subjected to another treatment. As long as the above properties are satisfied, the specific protein material may be produced by mixing a protein material that has undergone the molecular weight distribution adjustment treatment with a protein material that has not undergone the molecular weight distribution adjustment treatment. In this case, the ratio of the two (protein material that has undergone the treatment: protein material that has not undergone the treatment) can be adjusted as appropriate within a range that satisfies the properties described above, but may be, for example, from 1:99 to 99:1, for example, from 50:50 to 95:5, or from 75:25 to 90:10, in terms of mass ratio. In an embodiment, the protein material used in the present invention may be a protein material that has undergone the "degradation/denaturation and molecular weight distribution adjustment treatments".

The conditions of the treatment for degrading or denaturing a protein, for example, types and concentrations of an enzyme, pH, an organic solvent, a mineral, and the like, a temperature, a pressure, an output intensity, an electric current, and time, can be appropriately set by those skilled in the art. In a case in which an enzyme is used, examples of the enzyme to be used include proteases that are classified into "metal proteases", "acidic proteases", "thiol proteases", and "serine proteases". The reaction can be carried out at a reaction temperature of from 20 to 80°C and preferably of from 40 to 60°C. In the case of a pH adjustment treatment, the treatment can be carried out in a pH range in which any pH values of 2, 2.5, 3, 3.5, 4, 4.5, 5, 5.5, 6, 6.5, 7, 7.5, 8, 8.5, 9, 9.5, 10, 10.5, 11, 11.5, and 12 are set as the upper limit and the lower limit, and for example, the pH range may be from 2 to 12. In the case of an acid treatment, the method may be a method of adding an acid or a method of carrying out fermentation treatment, such as lactic acid fermentation. Examples of the acid to be added include inorganic acids, such as hydrochloric acid and phosphoric acid; and organic acids, such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food or drink containing an acid, such as a fruit juice of lemon or the like, a concentrated fruit juice, fermented milk, yogurt, or a brewed vinegar. In the case of an alkali treatment, an alkali, such as sodium hydroxide or potassium hydroxide, can be added. In the case of a denaturant treatment, a denaturant, such as guanidine hydrochloride, urea, arginine, or PEG, may be added. In the case of a heating or cooling treatment, examples of the heating temperature include temperature ranges that include any temperatures of 60°C, 70°C, 80°C, 90°C, 100°C, 110°C, 120°C, 125°C, 130°C, 135°C, 140°C, 145°C, and 150°C set as the upper limit and the lower limit, and for example, the temperature range may be from 60°C to 150°C. Examples of the cooling temperature include temperature ranges including any temperatures of -10°C, -15°C, -20°C, -25°C, -30°C, -35°C, -40°C, -45°C, -50°C, -55°C, -60°C, - 65°C, -70°C, and -75°C set as the upper limit and the lower limit, and for example, the temperature range may be from -10°C to -75°C. Examples of the heating or cooling time include time ranges including any times of 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes set as the upper limit and the lower limit, and for example, the time range may be from 5 seconds to 200 minutes. In the case of a high-pressure treatment, examples of the pressure condition include pressure ranges including any pressures of 100 MPa, 200 MPa, 300 MPa, 400 MPa, 500 MPa, 600 MPa, 700 MPa, 800 MPa, 900 MPa, and 1000 MPa set as the upper limit and the lower limit, and for example, the pressure range may be from 100 MPa to 1000 MPa. In the case of an organic solvent treatment, examples of the solvent to be used include alcohols and ketones, such as, for example, ethanol and acetone. In the case of a mineral addition treatment, examples of the mineral to be used include divalent metal ions, such as calcium and magnesium. In the case of a supercritical treatment, the treatment can be implemented, for example, using carbon dioxide in a supercritical state at a temperature of about 30°C or higher and a pressure of about 7 MPa or higher. In the case of an ultrasonic treatment, the treatment can be carried out, for example, by irradiation at a frequency of from 100 KHz to 2 MHz with an output of from 100 to 1000 W. In the case of the electrolysis treatment, for example, an aqueous protein solution may be treated by application of a voltage of from 100 mV to 1000 mV. In a specific embodiment, the treatment for decomposing and/or denaturing a protein is selected from the denaturant treatment, the heating treatment, and combinations thereof.

The conditions of the treatment for adjusting molecular weight distribution of a protein, for example, a type of filter medium, a carrier for gel filtration, the centrifugal rotation speed, an electric current, and time, can be appropriately set by those skilled in the art. Examples of the filter medium include filter paper, filter cloth, diatomaceous earth, ceramics, glass, and membranes. Examples of the carrier for gel filtration include dextran and agarose. Examples of the conditions of centrifugation include conditions of from 1000 to 3000 × g and of from 5 to 20 minutes.

The raw material of the protein material is evaluated by the following procedures.

### <Water content>

The water content is determined by an ordinary pressure heating loss method (105°C 12 hours).

### <Crude protein content>

The crude protein content is measured by the Kjeldahl method. Specifically, the mass of nitrogen measured by the Kjeldahl method relative to the weight of a protein material is represented by "mass%" as a crude protein content of the dried product. The nitrogen conversion coefficient is 6.25. Basically, the value is obtained by rounding off the value to the first decimal place.

### <TCA solubility>

A TCA solubility is a value obtained by adding, to a 2 mass% aqueous solution of a protein material, an equal amount of 0.44 M trichloroacetic acid (TCA) to prepare a 0.22 M TCA solution, and measuring the ratio of soluble nitrogen by the Kjeldahl method. Basically, the value is obtained by rounding off the value to the first decimal place.

### <Viscosity (viscosity after heating)>

The viscosity of the protein material is measured using a B-type viscometer (BM type viscometer available from TOKISANGYO). An aqueous protein material solution is prepared so as to have a crude protein content of 20 mass%, and filled in a measurement container, a rotor is set, and the container is sealed, and then heated at 80°C for 30 minutes in a hot water bath. Next, the viscosity is measured at a predetermined rotation speed at 25°C, the pointer value is read, and the viscosity is calculated by multiplying a rotor No. and a conversion multiplier corresponding to the rotation speed. (Unit: Pa·s) The measured value after 1 minute is used. Basically, the rotation speed is set to 60 rpm. For a sample having a high viscosity, the rotor No. is changed from 1 to 4, and the rotation speed is decreased to 6 rpm. A measurement upper limit viscosity in this measurement is 100000 mPa·s. When the rotor No. 4 and the rotation speed of 6 rpm exceed the measurement range, the viscosity after heating is immediately determined to be 100000 mPa·s or more.

### <NSI>

60 mL of water is added to 3 g of a sample, followed by propeller stirring at 37°C for 1 hour and centrifugation at 1400 × g for 10 minutes to collect a supernatant (I). Subsequently, 100 mL of water is added again to the remaining precipitate, and the mixture is stirred again with a propeller at 37°C for 1 hour and then centrifuged to collect a supernatant (II). The supernatants (I) and (II) are combined, water is added to the combined liquid, and thus the mixed liquid has a volume of 250 mL. After the mixed liquid is filtered with filter paper (No. 5), a nitrogen content of the filtrate is measured by the Kjeldahl method. At the same time, the nitrogen amount in the sample is measured by the Kjeldahl method, and the proportion of the amount of nitrogen collected as the filtrate (water-soluble nitrogen) to the total amount of nitrogen in the sample is expressed in mass% and is defined as the NSI. Basically, the value is obtained by rounding off the value to the first decimal place.

The water-containing chocolate of the present invention preferably contains 0.05 mass% or more of the protein material in the water-containing chocolate, more preferably 0.1 mass% or more, still more preferably 0.2 mass% or more, and even more preferably 0.3 mass% or more. When the content of the protein material is less than 0.05 mass% in the water-containing chocolate, the emulsifiability and the squeezing suitability may deteriorate in the production of the water-containing chocolate.

Similarly, the water-containing chocolate of the present invention preferably contains 5 mass% or less of the protein material in the water-containing chocolate, more preferably 3 mass% or less, and still more preferably 2 mass% or less. When the content of the present protein material is more than 5 mass% in the oil and/or fat composition, an unpleasant taste derived from the present protein material may occur.

The use of the protein material makes it possible to obtain a more stable emulsified state, which is difficult with a normal emulsifier. That is, a large amount of oil can be emulsified with a small amount of water. It is possible to produce an emulsion in an oil-in-water state with high oil content, that is, a water-containing chocolate having properties like mayonnaise.

The water-containing chocolate of the present invention has a good squeezing suitability, and the squeezing suitability is judged to be good when both ease of squeezing and cuttability (presence or absence of stringing) after squeezing are achieved well. As an example of a specific aspect, a state can be exemplified in which although the chocolate can be squeezed with one hand and is slightly strung, an edge slightly collapses after squeezing. As an example of a more preferred aspect of the present invention, the water-containing chocolate of the present invention exhibits a good flower imparting property when squeezed with a squeezing bag with a die such as a star-shaped die, and it is possible to produce a water-containing chocolate having a such a good shape retainability that the shape can be maintained even after squeezing with the squeezing bag with a die such as a star-shaped die.

Examples of the oils and/or fats that can be used in the water-containing chocolate of the present invention include fat components (cocoa butter) derived from cacao raw materials such as cocoa mass and cocoa powder, milk fat components derived from milk raw materials, vegetable oils and/or fats, such as soybean oil, high-erucic rapeseed oil, rapeseed oil, corn oil, cottonseed oil, peanut oil, sunflower oil, high-oleic sunflower oil, rice oil, safflower oil, high-oleic safflower oil, olive oil, sesame oil, palm oil, coconut oil, palm kernel oil, a medium-chain fatty acid-conjugated oil and/or fat (MCT), shea butter, and sal fat; animal oils and/or fats, such beef tallow and lard; and their hydrogenated oils, fractionated oils, hydrogenated fractionated oils, fractionated hydrogenated oils, and processed oils and/or fats produced by subjecting to interesterification; as well as mixed oils of these.

The oil content in the water-containing chocolate is preferably from 20 to 50 mass%, more preferably from 20 to 45 mass%, still more preferably from 25 to 45 mass%, and even more preferably from 30 to 45 mass%. When the oil content is less than 20 mass%, the water-containing chocolate becomes soft, and the shape retainability may be insufficient. When the oil content is more than 50 mass%, emulsification becomes unstable, and a flavor or texture may be unsuitable for the water-containing chocolate.

The water content contained in the water-containing chocolate of the present invention is preferably from 10 to 40 mass%, more preferably from 10 to 35 mass%, still more preferably from 15 to 35 mass%, and even more preferably from 15 to 30 mass% from the viewpoint of easy emulsification and good texture. The origin of the water content is not particularly limited. In addition to a cream or a sugar liquid such as starch syrup, water can be directly blended. When the water content is less than 10 mass%, emulsification as an oil-in-water type may be difficult, and when the water content is more than 40 mass%, the flavor may become watery and inferior.

In the water-containing chocolate of the present invention, a ratio of the water content to the oil content is preferably from 0.4 to 0.8, more preferably from 0.4 to 0.75, still more preferably from 0.45 to 0.75, even more preferably from 0.5 to 0.75, and most preferably from 0.5 to 0.7. When the ratio is adjusted to fall within such a numerical range, the water-containing chocolate of the present invention can be easily produced, and a water-containing chocolate having a good squeezing suitability and good post-squeezing shape retainability can be provided.

### ∘ Method for producing water-containing chocolate

The water-containing chocolate of the present invention is preferably produced by mixing a water-phase portion containing fresh cream with a base chocolate. More preferably, a blending amount of the fresh cream is 10 mass% or more and 40 mass% or less, and a blending amount of the base chocolate is 40 mass% or more and 90 mass% or less. Additional components may be blended in addition to the fresh cream and the base chocolate, and for example, water may be blended for adjusting the water content in addition to the fresh cream.

The water-containing chocolate of the present invention can be produced by a normal production method in which an oil-phase portion is mixed with the water-phase portion to produce an oil-in-water emulsion. In addition, the water-containing chocolate of the present invention can also be produced by a production method (phase inversion emulsification method) in which the water-phase portion is added to the oil-phase portion, and the phase is inverted from a water-in-oil emulsified state to an oil-in-water emulsified state to produce an oil-in-water emulsion. By the phase inversion emulsification method, water-containing chocolate having good emulsion stability and a good squeezing suitability can be produced.

In the water-containing chocolate of the present invention, a raw material that can be appropriately used for a water-containing chocolate can be used as long as the effect of the present invention is not impaired. Examples of the raw material that can be used include saccharides, sweeteners, liquid sugars, salts, pigments, aroma agents, liquors, butter, milk, fruit puree, nut paste, green tea, soy milk, and flavoring agents.

### Examples

Hereinafter, the present invention will be described in more detail by presenting examples of the present invention. In the examples, both % and parts are meant to be on a mass basis.

### ∘ Raw materials used

· As a soybean protein material D, "Green Map 2.0" (water content: 1.2%, crude protein content: 79.3%, TCA solubility: 61.8%, viscosity after heating: 28 mPa·s, NSI: 98.1) available from Fuji Oil Co., Ltd. was used.
· High oleic sunflower oil (iodine value: 81) was used for a vegetable oil and/or fat portion.
· Fructose-glucose syrup: HIGH FRACT M-75 (available from JAPAN CORN STARCH CO., LTD.)
· Fresh cream: Meiji Tokachi Fresh Cream 47 (available from Meiji Co., Ltd.)
· Processed starch: Delica E-7 (available from NIPPON STARCH CHEMICAL CO., LTD.)
· Agar: Ultra Agar UX-30 (available from Ina Food Industry Co., Ltd.)
· Maltose: Sunmalt Shiro (available from Hayashibara Co., Ltd.)
· Emulsifier 1: sugar ester "Ester S1670" (available from Mitsubishi Chemical Foods Corporation)
· Emulsifier 2: sugar ester "Ester S570" (available from Mitsubishi Chemical Foods Corporation)

### ∘ Preparation of base chocolate

Base chocolates A to C were prepared by blending according to the description in Table 1 (blending unit was parts by mass) and using a known method.

A cocoa butter component amount was calculated as a total amount of a cocoa butter in a cocoa powder used, a cocoa butter in cocoa mass, and a cocoa butter blended, provided that the cocoa butter content in a cocoa powder used was 11 mass%, the cocoa butter content in cocoa mass was 55 mass%.

### [Examples 1 to 9, Comparative Example 1]

A water-containing chocolate was prepared by normal emulsification using COMBI MIX (available from PRIMIX Corp.) according to the formulation (blending unit was parts by mass) described in Table 2.
· Fresh cream, water, fructose-glucose syrup, agar, maltose, the soybean protein material D, and an emulsifier were put in a tank of COMBI MIX (available from PRIMIX Corp.), and stirred until the resulting mixture became uniform.
· The product temperature was adjusted to 45°C or higher, and a base chocolate and a processed starch were added.
· The oils and/or fats were added in several batches. The mixture was stirred while being heated.
· Heat sterilization was performed at 68°C for 30 minutes. The resulting mixture was allowed to cool to produce a water-containing chocolate by normal emulsification.
· The prepared water-containing chocolate was filled in a 500-mL plastic container and stored under cooling at 5°C.

### [Examples 10 to 12]

A water-containing chocolate was prepared by inversion emulsification using COMBI MIX (available from PRIMIX Corp.) according to the formulation (blending unit was parts by mass) described in Table 3.
· A base chocolate, a processed starch, and the soybean protein material D were put in a tank of COMBI MIX (available from PRIMIX Corp.), heated until the base chocolate was melted, and stirred until a dough became uniform.
· Oils and/or fats were added and stirred until the dough became uniform.
· The product temperature was adjusted to 45°C or higher, and fresh cream and water were added in several batches. The mixture was stirred while being heated, and phase inversion was performed.
· Heat sterilization was performed at 68°C for 30 minutes. The resulting mixture was allowed to cool to produce a water-containing chocolate by inversion emulsification.
· The prepared water-containing chocolate was filled in a 500-mL plastic container and stored under cooling at 5°C.

### ∘ Viscosity

The prepared water-containing chocolate was adjusted to have a temperature of 50°C, and the viscosity was measured with a BM type viscometer (available from TOKYO KEIKI.) using a No. 3 rotor at 12 rpm. The measured values are listed in Tables 2 and 3.

### ∘ Water activity

The water activity (AW) of the prepared water-containing chocolate was measured at 25°C using AquaLab TDL, a water activity measuring device, available from METER Group, Inc. JAPAN. The measured values are listed in Tables 2 and 3.

**[Table 1]**

| | A | B | C |
|---|---|---|---|
| Cocoa powder | 5.3 | 5.0 | - |
| Cocoa mass | 4.2 | 4.0 | 14.7 |
| Whole milk powder | 22.2 | 20.9 | 21.8 |
| Sugar | 44.2 | 41.6 | 15.0 |
| Cocoa butter | 15.6 | 15.7 | 10.5 |
| Vegetable oil and/or fat | 8.5 | 13.0 | 38.0 |
| Aroma agent | 0.03 | 0.03 | 0.03 |
| Emulsifier 2 | 0.2 | 0.2 | 0.2 |
| Oil and/or fat content | 32.8% | 36.9% | 62.3% |
| Cocoa butter component amount | 18.5% | 18.4% | 18.6% |
| Milk solid content | 21.5% | 20.3% | 21.2% |

**[Table 2]**

| | Comparative Example | Examples | | | | | | | | |
|---|---|---|---|---|---|---|---|---|---|---|
| | 1 | 1 | 2 | 3 | 4 | 5 | 6 | 7 | 8 | 9 |
| Water | 18.8 | 15.0 | 10.0 | 18.0 | 15.0 | 15.3 | 18.3 | 18.9 | 15.0 | 13.0 |
| Fresh cream | 10.2 | 10.2 | 10.2 | 10.2 | 15.5 | 10.2 | 10.2 | 10.2 | 15.5 | 17.0 |
| Fructose-glucose syrup | | | | | | | | | 13.5 | 9.5 |
| Agar | | | | | | | | 0.2 | | |
| Maltose | | | | | | | | 1.0 | | |
| Soybean protein material D | | 0.5 | 0.5 | 1.0 | 1.0 | 0.5 | 0.5 | 0.5 | 1.0 | 1.0 |
| Emulsifier 1 | 0.2 | | | | | | | | | |
| Emulsifier 2 | 0.2 | | | | | | | | | |
| Base chocolate A | | 60.5 | 60.5 | | | 60.5 | | | | 20.0 |
| Base chocolate B | 60.5 | | | 60.5 | 60.5 | | 60.5 | 60.5 | | |
| Base chocolate C | | | | | | | | | 56.0 | 40.5 |
| Processed starch | 0.5 | | | | | 1.0 | 1.0 | | | |
| Vegetable oil and/or fat | 10.0 | 14.3 | 19.3 | 11.3 | 9.0 | 13.0 | 10.0 | 9.0 | | |
| Water content % | 23.8 | 20.0 | 15.0 | 23.0 | 22.5 | 20.3 | 23.3 | 23.9 | 25.9 | 23.6 |
| Oil content % | 37.1 | 38.9 | 43.9 | 38.4 | 38.6 | 37.6 | 37.1 | 36.1 | 42.2 | 39.8 |
| Water content % + oil content % | 60.9 | 58.9 | 58.9 | 61.4 | 61.2 | 57.9 | 60.4 | 60.0 | 68.0 | 63.4 |
| Water content/oil content | 0.64 | 0.51 | 0.34 | 0.60 | 0.58 | 0.54 | 0.63 | 0.66 | 0.61 | 0.59 |
| Water content/(water + oil) | 0.39 | 0.34 | 0.25 | 0.37 | 0.37 | 0.35 | 0.39 | 0.40 | 0.38 | 0.37 |
| Viscosity (50°C) (mPa·s) | 625 | 3870 | 8840 | 1750 | 2300 | 2600 | 1800 | 1700 | 1350 | 1350 |
| AW | 0.850 | 0.798 | 0.759 | 0.800 | 0.834 | 0.784 | 0.825 | 0.840 | 0.882 | 0.856 |

**[Table 3]**

| | Examples | | |
|---|---|---|---|
| | 10 | 11 | 12 |
| Base chocolate A | 60.5 | | 60.5 |
| Base chocolate B | | 60.5 | |
| Processed starch | | | 1.0 |
| Soybean protein material D | 0.5 | 0.5 | 0.5 |
| Vegetable oil and/or fat | 14.3 | 9.0 | 13.0 |
| Fresh cream | 10.2 | 15.5 | 10.2 |
| Water | 15.0 | 15.0 | 15.3 |
| Water content % | 20.0 | 22.5 | 20.3 |
| Oil content % | 38.9 | 36.1 | 37.6 |
| Water content % + oil content % | 58.9 | 58.7 | 57.9 |
| Water content/oil content | 0.51 | 0.62 | 0.54 |
| Water content/(water + oil) | 0.34 | 0.38 | 0.35 |
| Viscosity (50°C) (mPa·s) | 2700 | 1300 | 2250 |
| AW | 0.807 | 0.844 | 0.798 |

### [Evaluation Method]

Evaluation was performed by five panelists, and scoring was performed according to the following criteria by consultation. The panelists in this evaluation were five skilled panelists who had been engaged in research on western confectioneries. The evaluation results are listed in Table 4.

### [Squeezing suitability]

· Using a squeezing bag with a star-shaped die, the ease of squeezing and the cuttability (presence or absence of stringing) after squeezing were evaluated. When both the ease of squeezing and the cuttability after squeezing were evaluated as 3 or more points, it was judged that there was the squeezing suitability.

### ∘ Ease of squeezing

5 points: squeezing can be performed very easily with one hand
4 points: squeezing can be performed easily with one hand
3 points: squeezing can be performed with one hand
2 points: it is difficult to squeeze with one hand, and squeezing can be performed with both hands
1 point: squeezing cannot be performed even with both hands

### ∘ Cuttability after squeezing

5 points: no stringing occurs
4 points: although slight stringing occurs, an edge stands after squeezing
3 points: although slight stringing occurs, an edge slightly collapses after squeezing
2 points: stringing occurs, and an edge collapses after squeezing
1 point: stringing occurs without interruption

### [Shape retainability]

· The score was 3 or more points for both storage at room temperature and storage at 5°C, and it was judged that the shape retainability was good.

### O Shape retainability/room temperature

In a plastic container, a studied product was squeezed by about 8 g with a star-shaped die, stored at room temperature (20°C), and a shape change was visually evaluated. The evaluation was performed after 1 hour and after 24 hours.
5 points: the shape was maintained after 1 hour, and the shape was maintained even after 24 hours.
4 points: the shape was maintained after 1 hour, and the shape was slightly lost after 24 hours.
3 points: the shape was maintained after 1 hour, and the shape was lost after 24 hours.
2 points: the shape was lost after 1 hour.
1 point: the shape was lost immediately after squeezing.

### ∘ Shape retainability/5°C

In a plastic container, a studied product was squeezed by about 8 g with a star-shaped die, stored in a refrigerator (5°C), and a shape change was visually evaluated. The evaluation was performed after 1 hour and after 24 hours.
5 points: the shape was maintained after 1 hour, and the shape was maintained even after 24 hours.
4 points: the shape was maintained after 1 hour, and the shape was slightly lost after 24 hours.
3 points: the shape was maintained after 1 hour, and the shape was lost after 24 hours.
2 points: the shape was lost after 1 hour.
1 point: the shape was lost immediately after squeezing.

### O Emulsion stability

A plastic container was filled with 50 g of water-containing chocolate and stored at 60°C for 1 day, and separation of an oil layer was observed for evaluation. When the score was 3 or more points, it was judged that the emulsion stability was good.
5 points: uniform state without separation
4 points: a slight oil pattern is observed on the surface
3 points: an oil pattern is observed on the surface
2 points: an oil layer is slightly separated on the surface
1 point: an oil layer is separated on the surface

**[Table 4]**

| | | Examples | | | | | | | | | | | | Comparative Example |
|---|---|---|---|---|---|---|---|---|---|---|---|---|---|---|
| | | 1 | 2 | 3 | 4 | 5 | 6 | 7 | 8 | 9 | 10 | 11 | 12 | 1 |
| Squeezing suitability | Ease of squeezing | 4 | 3 | 5 | 5 | 4 | 5 | 5 | 5 | 5 | 4 | 5 | 5 | 5 |
| | Cuttability | 5 | 5 | 4 | 4 | 5 | 3 | 4 | 5 | 5 | 5 | 4 | 5 | 2 |
| Shape retainability | Room temperature | 5 | 4 | 3 | 3 | 5 | 4 | 5 | 5 | 3 | 5 | 3 | 5 | 1 |
| | 5°C | 5 | 5 | 3 | 3 | 5 | 5 | 5 | 5 | 3 | 5 | 3 | 5 | 1 |
| Emulsion stability | Storage at 60°C (1 day) | 3 | 3 | 5 | 4 | 3 | 5 | 5 | 4 | 4 | 4 | 4 | 4 | 5 |

### ∘ Discussion on Table 4

· The water-containing chocolate of Example had good evaluation results in all of squeezing suitability, shape retainability, and emulsion stability.
· From the comparison between Example 1 and Example 10 and the comparison between Example 5 and Example 12, the squeezing suitability and the emulsion stability were improved by phase inversion emulsification, and a more preferable water-containing chocolate was produced.
· In Comparative Example 1 in which the soybean protein material D was not blended, the squeezing suitability and the shape retainability were poor.

### Industrial Applicability

According to the present invention, it is possible to provide a water-containing chocolate having a good chocolate squeezing suitability and good shape retainability after squeezing of chocolate.

## Claims

1. A water-containing chocolate comprising a protein material having the following properties (A) and (B):
(A) after an aqueous solution having a crude protein mass of 20 mass% is heated at 80°C for 30 minutes, a viscosity measured at 25°C is 10000 mPa·s or less; and
(B) a TCA solubility of 0.22 M is from 30 to 95%.

2. The water-containing chocolate according to claim 1, wherein the protein material further has the following properties (C):
(C) NSI is 80 or more.

3. The water-containing chocolate according to claim 1 or 2, wherein an oil content is from 20 to 50 mass%, and a water content is from 10 to 40 mass%.

4. The water-containing chocolate according to claim 3, wherein a ratio of the water content to the oil content is from 0.4 to 0.8.

5. A method for producing a water-containing chocolate, the method comprising blending a protein material having the following properties (A) and (B) to produce an oil-in-water emulsion having an oil content of from 20 to 50 mass% and a water content of from 10 to 40 mass%:
(A) after an aqueous solution having a crude protein mass of 20 mass% is heated at 80°C for 30 minutes, a viscosity measured at 25°C is 10000 mPa·s or less; and
(B) a TCA solubility of 0.22 M is from 30 to 95%.

6. The method for producing a water-containing chocolate according to claim 5, wherein the protein material further has the following properties (C):
(C) NSI is 80 or more.

7. The method for producing a water-containing chocolate according to claim 5 or 6, wherein a ratio of the water content to the oil content is adjusted to from 0.4 to 0.8.

8. The method for producing a water-containing chocolate according to claim 5 or 6, the method further comprising inverting a phase from a water-in-oil emulsified state to an oil-in-water emulsified state.

9. The method for producing a water-containing chocolate according to claim 7, the method further comprising inverting a phase from a water-in-oil emulsified state to an oil-in-water emulsified state.

10. A method for improving squeezing suitability and post-squeezing shape retainability of a water-containing chocolate, the method comprising blending a protein material having the following properties (A) and (B):
(A) after an aqueous solution having a crude protein mass of 20 mass% is heated at 80°C for 30 minutes, a viscosity measured at 25°C is 10000 mPa·s or less; and
(B) a TCA solubility of 0.22 M is from 30 to 95%.

11. A method for improving squeezing suitability and post-squeezing shape retainability of a water-containing chocolate according to claim 10, wherein the protein material further has the following properties (C):
(C) NSI is 80 or more.

12. A method for improving squeezing suitability and post-squeezing shape retainability of a water-containing chocolate according to claim 10 or 11, wherein an oil content is from 20 to 50 mass%, and a water content is from 10 to 40 mass%.

13. A method for improving squeezing suitability and post-squeezing shape retainability of a water-containing chocolate according to claim 12, wherein a ratio of the water content to the oil content is from 0.4 to 0.8.
